# EUROPÄISCHE PATENTSCHRIFT

(11) **EP 1 375 288 B1**
(45) Veröffentlichungstag und Bekanntmachung des Hinweises auf die Patenterteilung: **07.03.2007**
(21) Anmeldenummer: 03013048.8
(22) Anmeldetag: 10.06.2003
(51) Int. Cl.: B61C 17/04, B61D 37/00, B60N 3/06

(54) **Höhenverstellbares Podest**
Height adjustable pedestal
Plateforme réglable en hauteur

(30) Priorität: 10.06.2002 DE 20208987 U
(43) Veröffentlichungstag der Anmeldung: 02.01.2004
(73) Patentinhaber: Tever Technik Vertriebs- und Beteiligungs-GmbH & Co. Beratungs KG, 83052 Bruckmühl (DE)
(72) Erfinder: Volke, Günther, c/o Tever Techn.Vertr.-u.Bet.GmbH, 83052 Bruckmühl (DE); Volke, Andreas, c/o Tever Techn.Vertr.-u.Bet.GmbH, 83052 Bruckmühl (DE)
(74) Vertreter: Viering, Jentschura & Partner

(56) Entgegenhaltungen:
- EP-A- 0 859 200
- DE-C- 19 615 532
- DE-U- 29 813 118
- US-A- 4 392 546

## Beschreibung

Die Erfindung betrifft ein höhenverstellbares Podest, insbesondere ein Fußpodest, bevorzugt zur Anwendung als Fußstütze für den Führer eines Fahrzeugs, im besonderen eines Schienenfahrzeugs, wie einer Lokomotive, einer Straßenbahn oder einem Triebzug.

Bei Schienenfahrzeugen, wie Verkehrszügen, U- und Straßenbahnen, sind in der Regel höhenverstellbare Fahrersitze vorgesehen, um jeweils unterschiedlich großen Zugführern die erforderliche Sicht nach vorne zu ermöglichen. Hierbei besteht jedoch das Problem, dass der Zugführer in der Regel Pedale per Fuß zu betätigen hat, die bei einem ausschließlichen Höhenverstellen des Sitzes nicht mehr bequem erreicht werden können. Zudem ist es auch von Vorteil, wenn ein Zugführer bei unterschiedlichen Sitzhöhen dennoch stets seine Füße insgesamt auf einer ebenfalls in der Höhe verstellbaren Fußstütze bequem abstützen kann. Solche Fußpodeste sind z.B. durch die DE-U1-29813 118 bekannt, wobei die Verstelleinrichtung einen Verstellmotor aufweist.

Es ist damit eine Aufgabe der Erfindung, ein höhenverstellbares Podest, insbesondere ein Fußpodest zur Anwendung als Fußstütze, für den Führer eines Fahrzeugs, wie insbesondere eines Schienenfahrzeugs, zu schaffen, welches einfach und kostengünstig herstellbar ist und hierbei dennoch einen stabilen und bequem verstellbaren Mechanismus bereitstellt.

Hierzu ist erfindungsgemäß ein höhenverstellbares Podest vorgesehen, mit einer Basis, einer Führungseinrichtung, die sich vertikal erstreckend auf der Basis angeordnet ist, einem Gleitschlitten, der an der Führungseinrichtung derart angeordnet ist, dass er entlang derselben vertikal geführt gleiten kann, einer Podestplattform, welche am Gleitschlitten befestigt ist und sich von diesem aus im wesentlichen horizontal erstreckt, und einer verstellbaren Gasdruckfeder, die vertikal zwischen die Basis und den Gleitschlitten geschaltet ist und von welcher der Gleitschlitten zusammen mit der daran angebrachten Podestplattform gegen die Basis in Vertikalrichtung verstellbar, bevorzugt stufenlos verstellbar, abgestützt ist.

Das erfindungsgemäße Podest ist mit seiner einfachen Gleitlagerung und der Gasdruckfeder als Halte- und Verstellmittel sehr einfach und dennoch sehr stabil. Das heißt, ein Nachgeben oder Verkanten der Vorrichtung tritt nicht auf. Die Basis kann hierbei eine Platte oder ein geschlossener Rahmen, wie zum Beispiel ein Vierkantrahmen mit aufgesetzter plattenförmiger Abdeckung sein. Die Basis kann auch jegliche Art von Halterung, wie z. B. ein Winkelstück, sein, mittels welcher das Podest am betreffenden Teil, wie z. B. einer Fahrzeugkarosserie, befestigt ist. Hierbei kann eine solche Fahrzeugkarosserie oder ein sonstiger Grundkörper auch Teil der Basis sein oder die Basis ihrerseits/seinerseits bilden, an der beispielsweise die Gasdruckfeder befestigt ist. Die Führungseinrichtung, die an der Basis fest angebracht ist, kann ihrerseits von einer einzigen Schiene oder Säule mit daran ausgebildeter oder angebrachter, sich in Vertikalrichtung erstreckender Gleitschiene gebildet sein, entlang welcher der Gleitschlitten geführt bewegbar ist. Eine solche Gleitschiene kann hierzu zum Beispiel im Querschnitt V-förmig sein, so dass sie mit einem entsprechend geformten Gegenstück eine Art Schwalbenschwanz-Führung ausbildet. Die Vertikalführung kann auch aus einfachen Halbzeugen zusammengesetzt sein, zum Beispiel in Form einer im Querschnitt rechteckigen Gleitschiene, welche von einem U-Profil umgeben ist, wobei hierbei in einem horizontalen Abstand ein Gegenhalter vorzusehen ist, damit das U-Profil nicht aus der Gleitschiene gelangen kann.

Der Gleitschlitten kann ein Einzelteil sein oder auch aus mehreren Teilen zusammengesetzt sein; so sollen auch zum Beispiel an mehreren Führungsleisten geführte separate Gleitteile als ein solcher Gleitschlitten verstanden werden. Der Gleitschlitten kann ferner ein von der Podestplattform separates Teil sein. Hierbei ist die separate Podestplattform dann fest am Gleitschlitten angebracht, z. B. mittels Schrauben, so dass sie mit diesem vertikal mitbewegbar ist. Die Podestplattform kann jedoch auch integral, das heißt zum Beispiel stofflich einstückig mit dem Gleitschlitten vorgesehen sein.

Die Gasdruckfeder ist einfach mit ihrer ausfahrbaren Hubstange am Gleitschlitten oder der an diesem befestigen Podestplattform befestigt.

Die Gleitlagerung des Podests bietet eine ausreichende Verkantungssicherheit und ist ferner insgesamt sehr wartungsarm und kann damit kostengünstig betrieben werden. Das Podest kann in einfacher Weise mit Tastern und/oder Pedalen für z. B. Sicherheitsfahrschalter, Hupen, Türöffner usw. ausgestattet werden. Die Vorrichtung ist insgesamt sehr einfach und damit kostengünstig herstellbar.

Nach einer Ausführungsform der Erfindung hat die Führungseinrichtung einen Führungsrahmen mit wenigstens zwei vertikal verlaufenden Führungsschienen, die parallel in einem Abstand voneinander verlaufen und von denen der Gleitschlitten geführt ist. Hierbei ist die Gasdruckfeder horizontal gesehen im wesentlichen auf Höhe sowie zwischen den beiden Führungssäulen angeordnet, und die Podestplattform ist stirnseitig am Führungsschlitten befestigt und erstreckt sich mit einem Auslegerabschnitt vom Führungsrahmen weg. Diese Konstruktion hat den Vorteil, dass die Führungsschienen stirnseitig (weit) über die Podestplattform vertikal hervorstehen können, so dass dem Gleitschlitten mit der daran angebrachten Podestplattform eine sehr große vertikale Verstellmöglichkeit gegeben werden kann. Gleichzeitig kann die Podestplattform aber auch sehr flach vorgesehen werden, so dass sie, wenn komplett heruntergefahren, mit ihrer Oberseite nur knapp über der Basis verläuft, was eine besonders tiefliegende Vorderkante ermöglicht. Die beiden auf der Basis angebrachten Führungsschienen sind bevorzugt an ihren von der Basis abgewandten Längsenden über ein von einer Querstrebe gebildetes Brückenteil miteinander fest verbunden, wodurch eine noch höhere Steifigkeit der Führungseinrichtung erzielt wird.

Nach einer bevorzugten Ausführungsform ist der Gleitschlitten mit lösbar daran angebrachten Gleitplatten versehen, die entlang der Führungsschienen gleitend geführt sind und die unter Ausbildung eines reibungsarmen Gleitlagers zwischen Gleitschlitten und Führungsschiene auf ihrer der zugehörigen Führungsschiene zugewandten Seite mit einer Gleitbeschichtung versehen sind. Diese lösbar angebrachten Gleitplatten ermöglichen ein nahezu spielfreies Zusammenpassen der Gleitteile, wobei eine Zusatzschmierung durch Öl oder Fett entfallen kann, was den Wartungsaufwand erheblich verringert. Dennoch bleibt die Konstruktion einfach, da diese Gleitplatten in einfacher Weise am Gleitschlitten anbringbar sind, z. B. mittels Senk-Schrauben. Hierbei sind am Gleitschlitten bevorzugt Führungsleisten vorgesehen, welche die Führungsschiene im Querschnitt umgreifen und an denen auf der mit der zugehörigen Führungsschiene in Kontakt kommenden Seite solche Gleitplatten vorgesehen sind. An der jeweiligen Führungsschiene ist bevorzugt ihrerseits eine Führungsleiste vorgesehen, an welcher der Gleitschlitten mit seinen Gleitplatten anliegt. Die rahmenseitigen Führungsleisten sind hierbei bevorzugt einfach aus rostfreiem Stahl vorgesehen. Es ist ersichtlich, dass alternativ die Gleitplatten auch an den rahmenseitigen Führungsschienen vorgesehen sein können, wobei die gleitschlittenseitigen Gegenstücke dann auch lediglich aus Stahl vorgesehen sein können. Auch können z. B. die Führungsschienen bzw. deren Führungsleisten oder die Führungsleisten am Gleitschlitten insgesamt mit einer Gleitbeschichtung versehen sein. Die Gleitplatten haben bevorzugt eine schmale, längliche Form und werden mit ihrer Längsrichtung in Vertikalrichtung verlaufend am Gleitschlitten angebracht. Als Beschichtungswerkstoff für die Gleitplatten kommt z. B. Teflon^{R} in Frage, wobei die Gleitplatte ansonsten aus Metall, wie insbesondere Bronze, ist. Bei Verschleiß können die Gleitplatten in einfacher Weise ausgewechselt werden.

Nach einer alternativen Ausführungsform hat die Führungseinrichtung wenigstens zwei vertikale Führungssäulen, die parallel in einem Abstand voneinander verlaufen und von denen der Gleitschlitten geführt ist. Hierbei ist der Gleitschlitten wannenförmig ausgebildet und auf die Führungssäulen aufgesetzt, so dass die Führungssäulen im Rahmen der Verlagerung des Gleitschlittens in diesen versenkbar sind. Die Podestplattform ist auf dem Gleitschlitten angeordnet. Die Gasdruckfeder kann außen am, insbesondere stirnseitig, oder auch im Inneren des Gleitschlitten(s) angebracht sein. Zwar hat diese Ausführungsform in der Regel einen geringeren Vertikalhub, da dieser durch die beschränkte Maximal-Höhe des wannenförmigen Gleitschlittens stärkeren Einschränkungen unterliegt, jedoch hat diese Variante den Vorteil, dass die Führungssäulen geringer Momentenbelastung ausgesetzt sind, da der Gleitschlitten von oben her auf die Säulen aufgesetzt ist und sich nicht, wie bei der obigen Rahmenführung, horizontal von diesen wegerstreckt. Die Wannenform ermöglicht des Weiteren, dass im Gleitschlitten in bequemer und sicherer Weise elektrische und/oder hydraulische Steuerleitungen untergebracht werden können. Die Wannenform des Gleitschlittens mit der damit verbundenen per se größeren Bauhöhe ist insbesondere bevorzugt, wenn bei komplett heruntergefahrenem Podest eine hochliegende Vorderkante der Podestplattform gewünscht ist.

Die Führungssäulen sind bevorzugt kreiszylindrische Rohre, die in korrespondierenden Buchsen am Gleitschlitten laufen. Es können jedoch auch Vierkantsäulen oder sonstige Säulen vorgesehen sein, die in entsprechend angepassten Aufnahmen am Schlitten geführt sind. Die Säulen können auch als Vollmaterialstangen vorgesehen sein.

Nach dieser Ausführungsform mit auf die Führungssäulen aufgesetztem Gleitschlitten sind bevorzugt in den Gleitschlitten von dessen Unterseite her Gleitbuchsen eingelassen, in welchen die Führungssäulen gleitend aufgenommen sind. Die Führungssäulen sind bevorzugt aus einem sehr dauerhaften, verschleißfreien Material, wie zum Beispiel gehärtetem, rostfreiem Stahl vorgesehen, wobei die Gleitbuchsen zumindest an ihrer der jeweiligen Säule zugewandten Seite aus einem demgegenüber weicheren Material sind, wie z. B. dem oben genannten Beschichtungsmaterial. Die Gleitbuchsen sind bevorzugt einfach von außen her in den Gleitschlitten eingesteckt und mittels sich kragenförmig erstreckenden Flanschen außen an die Unterseite des Gleitschlittens angelegt und dort befestigt. Damit können sie im Verschleißfall sehr einfach ausgewechselt werden. Auch die Führungssäulen sind bevorzugt lösbar mit der Basis verbunden, so dass sie im Bedarfsfalle ebenfalls einfach austauschbar sind.

Als Gasdruckfeder kommt eine handelsübliche, in ihrem Hub insbesondere stufenlos verstellbare und wieder blockierbare Gasdruckfeder in Betracht, welche nach einer bevorzugten Ausführungsform mit einem Fußhebel, der z. B. auf der Podestplattform mitbewegbar angeordnet ist, betätigbar und dadurch in sehr einfacher Weise verstellbar ist. An die Gasdruckfeder kann alternativ auch ein Handhebel angeschlossen sein, der in einem Fahrpult angebracht ist, so dass die Feder in diesem Falle bequem handbetätigbar ist.

Im Betrieb hat der Fahrer einfach nur den Fußhebel oder Handhebel der Gasfeder zu drücken/ziehen, um dadurch die gewünschte Höhe der Podestplattform einzustellen. Nach Freigabe des Fußhebels bzw. des Handhebels ist die Gasfeder zusammen mit dem daran befestigten Gleitschlitten sowie der daran befestigten Plattform in Vertikalposition unnachgiebig blockiert, d.h. fixiert.

Nach einer weiter bevorzugten Ausführungsform der Erfindung ist an der Unterseite der Podestplattform eine Heizeinrichtung angebracht, mittels welcher die Podestplattform beheizbar ist. Die beheizte Podestplattform kann auch über einen anderen Verstellmechanismus als die Gasdruckfeder verstellbar vorgesehen sein, obwohl letztere Höhenverstellung bevorzugt ist, weil sie einfach und platzsparend ist, so dass die Heizeinrichtung einfacher untergebracht werden kann.

Als bevorzugte Variante der Erfindung ist an der Unterseite der Podestplattform, d.h. insbesondere einer Platte, eine Heizfolie oder eine Heizmatte angebracht, insbesondere aufgeklebt, welche die Podestplattform direkt wärmeleitend beheizt. Es jedoch auch denkbar an der Unterseite der Podestplattform einen Heizlüfter anzuordnen, der die Umgebungsluft im Podestbereich und damit die Podestplattform indirekt mitbeheizt.

Die Podestplattform ist vorteilhaft als komplettes Heizpaneel vorgesehen, welches nach einer Ausführungsform einen Verbundaufbau mit einer eine Wabenstruktur aufweisenden metallischen Kernschicht und zwei die Kernschicht abdeckenden Deckschichten aufweist, wobei mindestens die untere Deckschicht im wesentlichen aus einem Metallmaterial besteht, und wobei unter der unteren Deckschicht mindestens eine mit dieser wärmeleitend in Verbindung stehende Heizvorrichtung lösbar angebracht ist, die mindestens einen an der unteren Deckschicht wärmeleitend befestigten Heizflansch mit mindestens einem daran in wärmeleitender Verbindung und im Abstand von dem Heizpaneel angeordneten Heizelement aufweist.

Indem die Heizeinrichtung an der Podestplattform angebracht und damit mit dieser höhenverstellbar ist, ist in einfacher Weise eine energiesparende ständige Beheizung der Podestplattform möglich. Die beheizte Podestplattform bringt für den Nutzer insbesondere bei Verwendung als Fußstütze einen erheblichen Komfortgewinn mit.

Die Ausbildung der Podestplattform als wie vorstehend beschriebenes Heizpaneel bildet hierbei eine sehr platzsparende Variante, welche auch bei der oben beschriebenen Version mit Rahmenführungseinrichtung problemlos einsetzbar ist. Bei Verwendung des wannenförmigen Gleitschlittens bietet dieser darüber hinaus auch ausreichend Platz, um größer bauende Heizvorrichtungen optisch verdeckt unterzubringen.

Bevorzugt weist die Heizvorrichtung jedoch einen an der unteren Deckschicht wärmeleitend befestigten Heizflansch mit mindestens einem darauf in wärmeleitender Verbindung und mit im Abstand von dem Heizpaneel angeordneten Heizelementen auf. Der Heizflansch kann dabei z. B. L-förmig sein, wobei eine Fläche auf der unteren Deckschicht angebracht und auf der anderen Fläche das Heizelement so angeordnet ist, dass es in keinem direkten Kontakt zum Heizpaneel steht. Es wird aus statischen, funktionalen und sicherheitstechnischen Gründen jedoch bevorzugt, dass der Heizflansch im Querschnitt im Wesentlichen einer Wanne entspricht. Das heißt, dass er zwei ebene Flächen, die Wannenränder, mit denen er wärmeleitend auf der unteren Deckschicht angebracht ist, und einen mit den Wannenrändern einstückig verbundenen Wannenboden im Abstand vom Heizpaneel aufweist, auf dessen Innenseite mindestens ein Heizelement im Abstand von der unteren Deckschicht wärmeleitend angebracht ist.

Im Betrieb erzeugt das Heizelement infolge seiner hohen Temperatur am Ort seiner Anbringung lokal eine große Wärmemenge und gibt diese an den Heizflansch ab. Diese Wärme verteilt sich über den gesamten Heizflansch und wird aufgrund der wärmeleitenden Anordnung des Heizflansches auf der unteren Deckschicht an das eigentliche Heizpaneel übertragen. Auf diese Weise wird erreicht, dass sich das Heizpaneel sehr gleichmäßig erwärmt. Im Betrieb wird eine Wärmeverteilung von +/- 3 K auf 2 m² Heizfläche erreicht. Eine direkte Anbringung nicht flächenförmiger Heizelemente an der unteren Deckschicht hingegen würde dazu führen, dass die Wärme durchschlagen würde und so das Heizpaneel im Bereich der Anbringung der Heizelemente unerträglich heiß werden würde, von den Heizelementen weiter entfernte Bereich jedoch deutlich kühler wären, so dass die Wärmeverteilung sehr ungleichmäßig wäre.

Wesentlich für die besonders gleichmäßige Wärmeverteilung bei dem erfindungsgemäßen Heizpaneel mit Heizflanschen ist also, dass die Wärme nicht punktuell übertragen wird, wie es bei einer direkten Anbringung nicht flächenförmiger Heizelemente an das Heizpaneel der Fall wäre, sondern über eine ausreichend große Fläche verteilt. Das bedeutet, dass das Heizelement den Heizflansch, an dem es angebracht ist, erhitzt, ohne in direktem Kontakt mit dem Heizpaneel zu stehen. Eine direkte Wärmeübertragung vom Heizelement zum Paneel erfolgt nicht. Die von dem Heizelement an den Heizflansch übertragene Wärme wird dann über die Flächen des Heizflansches, die in direktem, wärmeleitendem Kontakt mit dem Paneel stehen, an dieses übertragen. Die Wärmeleitung, und damit die erzielbare gleichmäßige Wärmeverteilung, ist dabei umso besser, je größer die Materialstärke des Heizflansches ist.

Das Heizpaneel kann mit einem oder mit mehreren, in Abständen voneinander angeordneten Heizflanschen versehen sein.

Die Heizflansche können jeweils mit nur einem Heizelement oder mit mehreren Heizelementen versehen sein.

Es können als Heizelemente auch PTC-Heizelemente verwendet. Die Verwendung von PTC-Heizelementen hat folgenden Vorteil: Da der Widerstand von PTC-Leitern mit steigender Temperatur steigt, sinkt bei an eine konstante Spannung angelegten PTC-Heizelementen der Heizstrom mit steigender Temperatur, wodurch die Heizleistung reduziert wird. Somit wirken die PTC-Heizelemente für die Heizleistung selbstbegrenzend und können nicht überhitzen. Die erfindungsgemäßen, mittels PTC-Heizelementen beheizten Heizpaneele sind somit sehr langlebig. Auf diese Weise ist bei eingeschränktem Umgebungstemperaturbereich auch ein selbstregelnder Betrieb der Heizelemente möglich, bei dem die Heiztemperatur bei einem festen Wert verbleibt, der über die an die Heizelemente angelegte Spannung voreingestellt werden kann.

Auch wenn die PTC-Heizelemente selbstregelnd betreibbar sind, sind sie dennoch, genauso wie die flächenförmigen Heizelemente, bevorzugt an eine ihnen gemeinsame Reglereinheit für die Heizleistung angeschlossen. Entsprechende Reglereinheiten sind im Stand der Technik hinlänglich bekannt. Die Reglereinheit kann von dem Heizpaneel getrennt oder auf der Unterseite des Paneels angeordnet sein. In beiden Fällen kann das Heizpaneel werksseitig vollständig vormontiert sein, so dass es einfach einbaubar ist und mit Steckverbindungen an die Reglereinheit anschließbar ist.

Ein für den Regelkreis erforderlicher Temperatursensor ist bevorzugt in das Paneel integriert.

Das Heizpaneel ist ohne Temperaturbegrenzer betreibbar. Als Schutz vor Überhitzung ist jedoch vorzugsweise ein Temperaturbegrenzer als Sicherung vorgesehen, der in das Heizpaneel integriert ist.

Vorzugsweise werden Temperatursensor und Temperaturbegrenzer in von oben zugänglichen und mit einem Deckel verschließbaren Aussparungen im Heizpaneel angeordnet. Auf diese Weise sind sie leicht zugänglich und können gegebenenfalls leicht geprüft oder ausgetauscht werden.

Gegenstände, wie z. B. ein Sitzgestell, können auf dem Heizpaneel z. B. durch Festkleben befestigt werden. Es ist jedoch vorteilhaft, wenn zur Befestigung von Gegenständen in die Kernschicht metallische Befestigungsbüchsen eingelassen, z. B. eingeklebt, oder Befestigungsbüchsen aus Kunststoff eingegossen sind, so dass die Gegenstände mittels Schraubverbindungen auf dem Heizpaneel befestigt werden können. Auf diese Weise lassen sich Umbauten auf dem Heizpaneel einfach bewerkstelligen. Im Falle der mit Heizflanschen versehenen Heizelemente können in diesen auch Aussparungen für Sitzgestelle und Durchführungen von Druckluft-, Hydraulik- und anderen Leitungen vorgesehen sein.

Die Wabenstruktur kann im Querschnitt dreieckige, quadratische, rechteckige, runde oder ovale Waben aufweisen, bevorzugt weist sie jedoch eine Honeycombstruktur mit im Querschnitt sechseckigen Wabenzellen auf. Es hat sich gezeigt, dass sich auf diese Weise eine besonders hohe Stabilität, eine besonders gute Wärmeleitung sowie eine besonders gleichmäßige Wärmeverteilung erreichen lässt.

Die Kernschicht kann aus unterschiedlichen Metallen bzw. Metalllegierungen sein, bevorzugt ist sie jedoch aus Aluminium oder einer Aluminiumlegierung. Ebenso können die Deckschichten aus unterschiedlichen Metallen oder Metalllegierungen sein, bevorzugt sind sie jedoch auch aus Aluminium oder einer Aluminiumlegierung.

Als eine in die Podestplattform integrierte Heizeinrichtung kann nach einer anderen Ausführungsform der Erfindung auch eine Flächenheizeinrichtung zum Beheizen von Flächenstrukturen vorgesehen sein, die eine die Oberseite der Podestplattform bildende Deckplatte, die aus einem wärmeleitenden Material hergestellt ist, mindestens zwei blockförmige wärmeverteilende Stege, die aus einem wärmeleitenden Material hergestellt sind und die entlang der Deckplatte im Abstand voneinander verteilt angeordnet sind und an der Unterseite der Deckplatte wärmeleitend befestigt sind, und mindestens ein elektrisches Flächenheizelement aufweist, das zwischen den blockförmigen Stegen angeordnet ist und an der Unterseite der Deckplatte wärmeleitend befestigt ist, wobei die blockförmigen wärmeleitenden Stege eine Dicke aufweisen, die wenigstens so groß, bevorzugt größer ist als die Dicke des elektrischen Flächenheizelements. Als Heizelemente sind hierbei bevorzugt Heizmatten oder Heizfolien vorgesehen, welche eine gleichmäßige großflächige Wärmeabgabe mit sich bringen.

Alternativ ist eine Flächenheizeinrichtung zum Beheizen von Flächenstrukturen in die Podestplattform integriert, die eine die Oberseite der Podestplattform bildende Deckplatte, die aus einem wärmeleitenden Material hergestellt ist, mindestens zwei blockförmige wärmeverteilende Stege, die aus einem wärmeleitenden Material hergestellt sind und die entlang der Deckplatte im Abstand voneinander verteilt angeordnet sind und an der Unterseite der Deckplatte wärmeleitend befestigt sind, eine als Wärmeverteilplatte dienende Bodenplatte, die aus einem wärmeleitenden Material hergestellt ist und an der Unterseite der blockförmigen Stege wärmeleitend angebracht ist, und mindestens ein elektrisches Heizelement aufweist, das zwischen den blockförmigen Stegen auf der Oberseite der Bodenplatte wärmeleitend angeordnet ist, wobei die blockförmigen wärmeleitenden Stege eine Dicke aufweisen, die wenigstens so groß, bevorzugt größer ist als die Dicke des elektrischen Heizelements. Indem bei dieser Ausführungsform das Heizelement nicht unmittelbar an der Deckplatte anliegt, sondern die Wärme über die Bodenplatte und die Stege an die Deckplatte weitergeleitet wird, sind hier insbesondere auch Punktheizquellen mit punktuell starker Wärmeabgabe, wie z. B. PTC-Heizelemente, verwendbar, ohne dass an der Deckplatte lokale Überhitzungen auftreten.

Die beiden letztgenannten Heizeinrichtungen gewährleisten ebenfalls eine sehr gleichmäßige Erwärmung der Podestplatteform. Da die Dicke der wärmeverteilenden blockförmigen Stege wenigstens so groß, bevorzugt größer ist als die Dicke des elektrischen Heizelements, liegt das elektrische Flächenheizelement nicht an der Flächenstruktur an und wird keiner Druckbelastung ausgesetzt.

Als Heizeinrichtung ist weiter bevorzugt eine Luftheizvorrichtung zum Erwärmen von Raumluft eines Innenraums. Bei dieser Heizeinrichtung wird die Oberseite der Podestplattform nicht als mit der Heizung integrales Bauteil verwendet und daher nicht über direkte Wärmeleitung beheizt, sondern wird die Luft im Bereich der Podestplattform erwärmt. Die Wärmeabgabe ist bevorzugt durch einen Ventilator verstärkt, der hierbei bevorzugt regelbar ist.

Die Erfindung wird im Folgenden anhand bevorzugter Ausführungsbeispiele mit Bezugnahme auf die beiliegende Zeichnung erläutert. In der Zeichnung zeigen:
Figur 1 eine Seitenansicht eines höhenverstellbaren Podests nach einer ersten Ausführungsform der Erfindung,
Figur 2 eine Rückansicht des in Figur 2 gezeigten Podests,
Figur 3 einen Schnitt entlang der in Figur 5 mit C-C bezeichneten Linie,
Figur 4 einen Schnitt entlang der in Figur 5 mit D-D bezeichneten Linie,
Figur 5 eine teilweise aufgeschnittene Draufsicht der in Figur 1 gezeigten Vorrichtung,
Figur 6 einen Schnitt entlang der in Figur 1 mit A-A bezeichneten Linie,
Figur 7 einen Schnitt entlang der in Figur 1 mit B-B bezeichneten Linie,
Figur 8 einen Schnitt eines höhenverstellbaren Podests gemäß einer anderen Ausführungsform der Erfindung entlang der in Figur 11 mit A-A bezeichneten Linie,
Figur 9 das in Figur 8 gezeigte Podest in einer Seitenansicht,
Figur 10 das Podest nach Figuren 8 und 9 in der Rückansicht,
Figur 11 das Podest nach Figuren 8 bis 10 in der Draufsicht,
Figuren 12 bis 16 jeweils Teilquerschnitte von Podestplattformen mit integrierter Heizeinrichtung nach jeweils unterschiedlichen Ausführungsformen der Erfindung.

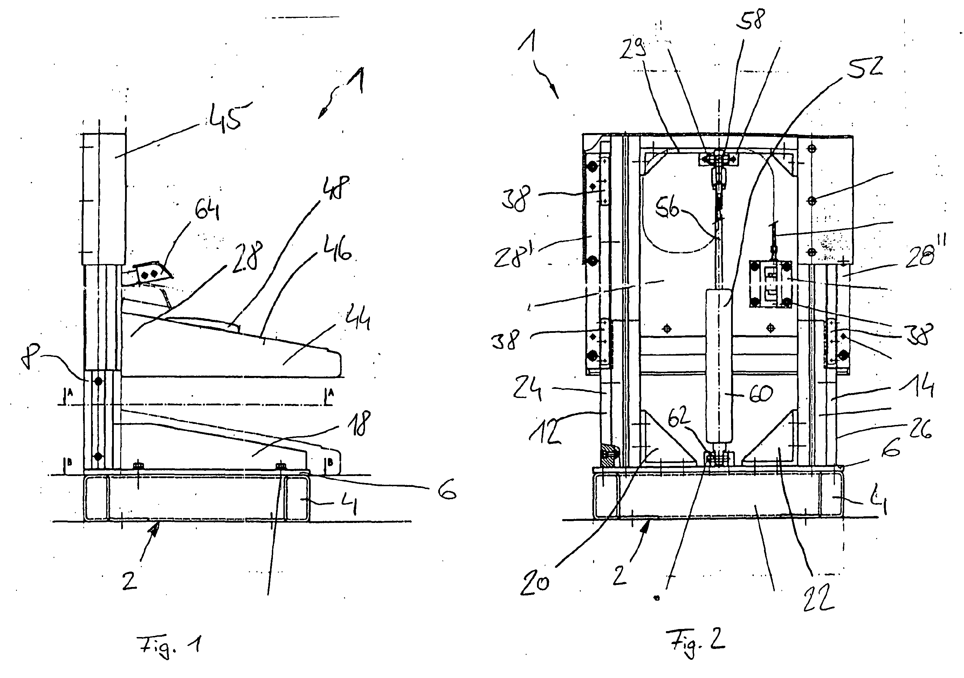

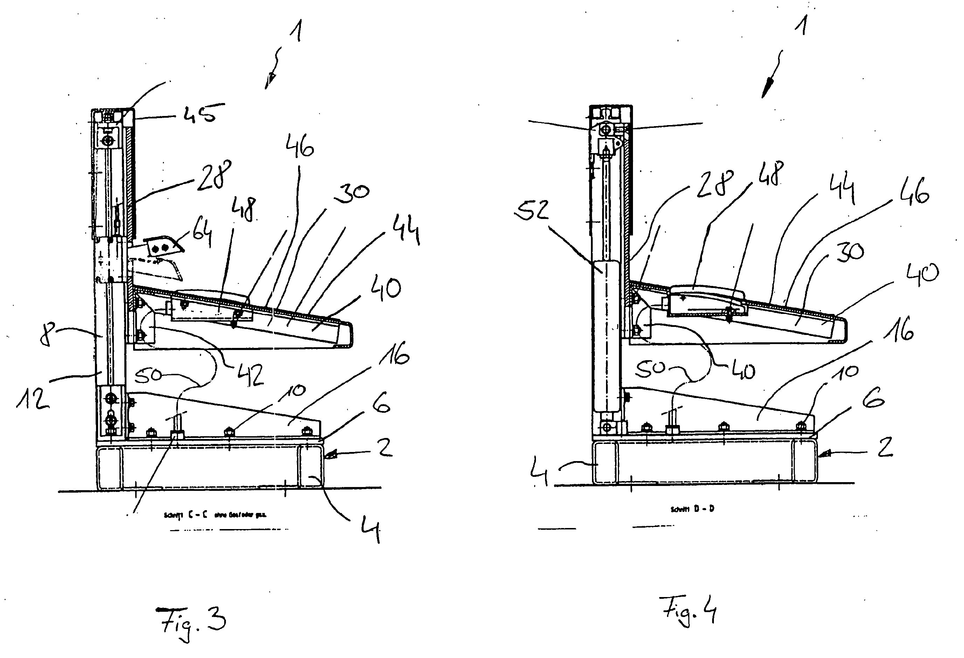

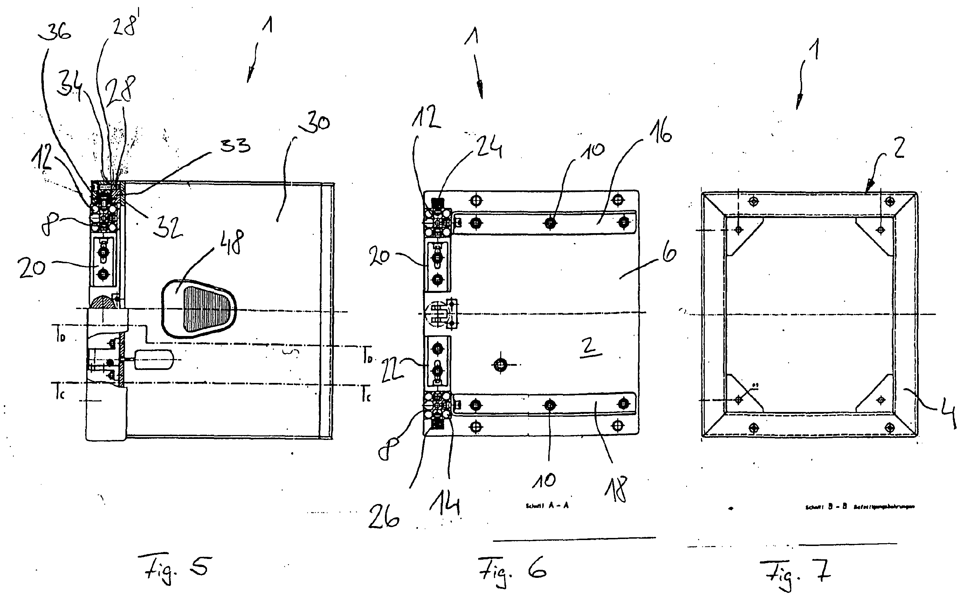

Gemäß den Figuren 1 bis 7 weist ein Podest 1 nach einer ersten Ausführungsform der Erfindung eine Basis 2 in Form eines Rechteckrahmens aus Vierkantstahlrohr 4 mit darauf aufgelegter und am Vierkantrahmen befestigter (hier mittels Schrauben) oberer Abdeckplatte 6 auf.

Auf der oberen Abdeckplatte 6 der Basis 2 ist ein Führungsrahmen 8 mittels Schrauben 10 fest angebracht. Der Führungsrahmen 8 weist zwei sich vertikal nach oben erstreckende Führungsschienen 12 auf, die in Form von Profilschienen ausgebildet sind und die in einem horizontalen Abstand zueinander parallel verlaufen.

Die Führungsschienen 12, 14 sind im Querschnitt quadratisch, wobei an jeder Seitenfläche eine entlang der Führungsschiene 12, 14 verlaufende hinterschnittene Längsnut vorgesehen ist, in welcher Befestigungsmittel, wie insbesondere Spannmittel, angeordnet werden können. Die Führungsschienen 12, 14 sind jeweils an ihrem der Basis 2 zugewandten Ende mit einem langen Winkelansatzteil 16, 18 versehen, welches mittels in die eine Längsnut reichender Schrauben an der zugehörigen Führungsschiene 12, 14 befestigt ist. Die Winkelansatzteile 16, 18 erstrecken sich mit ihrer Länge über die gesamte Basis 2 hinweg und sind mit dieser über die genannten Schrauben 10 fest verschraubt. Zur Seite sowie nach innen hin sind kurze Winkelansatzteile 20, 22 vorgesehen, die in der gleichen Weise mit den Führungsschienen 12, 14 und der Basis 2 verschraubt sind wie die Winkelansätze 16, 18. Seitlich außen an den Führungsschienen 12, 14 ist eine jeweilige sich entlang der Längsrichtung der zugehörigen Führungsschiene 12, 14 erstreckende Vierkant-Führungsleiste oder -Gleitleiste 24, 26 angeordnet (vgl. insbesondere Figur 6), welche in Richtung der jeweiligen Führungsschiene 12, 14 weisende Vorsprünge aufweist, die sich in die seitlichen äußeren Längsnuten der jeweiligen Führungsschienen 12, 14 hineinerstrecken und an denen zur Befestigung der jeweiligen Führungsleiste 24, 26 an der zugehörigen Führungssäule 12, 14 von innen her Kontermittel in Form von Muttern vorgesehen sind. An ihren oberen Enden sind die Führungsschienen 12, 14 unter Komplettierung des Rahmens 8 nach dieser Ausführungsform über ein Brückenteil 29 fest miteinander gekoppelt, welches sich quer zur Längsrichtung der beiden Führungsschienen 12, 14 erstreckt. Das Brückenteil 29 ist in Form einer Rahmenleiste ausgebildet, welche hier an ihren Enden mittels jeweils eines Winkelstückes an der zugehörigen Führungsschiene befestigt ist (hier durch Schrauben).

An dem Führungsrahmen 8 ist ein Gleitschlitten 28 derart abgestützt, dass er entlang der beiden Führungsschienen 12, 14 des Führungsrahmens 8 vertikal geführt verschiebbar ist. An dem Gleitschlitten 28 ist eine sich von demselben und damit eine sich von den Führungsschienen 12, 14 im wesentlichen horizontal wegerstreckende Podestplattform 30 fest angebracht. Die Führungsschienen 12, 14 erstrecken sich stirnseitig der Podestplattform 30 an dieser vertikal nach oben vorbei, wobei die Podestplattform 30 damit entlang annähernd der gesamten Länge der Führungsschienen 12, 14 entlang diesen vertikal verfahrbar ist.

Der Gleitschlitten 28 ist hier mit drei Hauptkomponenten vorgesehen, und zwar mit einem ersten langgestreckten Gleitteil 28', das an der einen Führungsschiene 12 gleitend geführt ist, einem zweiten langgestreckten Gleitteil 28'', das an der anderen Führungsschiene 14 gleitend geführt ist, und einer die beiden Gleitteile 28', 28'' fest verbindenden Frontplatte 32, die von vorne, d.h. von der Podestseite her an den Gleitteilen 28', 28'' befestigt ist (hier mittels Schrauben). Zusätzlich ist die Podestplattform 30 mit ihrer hinteren Stirnseite an den Gleitteilen 28', 28'' und der Frontplatte 32 festgelegt, hier angeschraubt, so dass der hintere Stirnabschnitt der Podestplattform 30 den Gleitschlitten 28 zusätzlich aussteift und damit auch als ein Teil des Gleitschlittens 28 angesehen werden kann. Die Gleitteile 28', 28'' sind gleich ausgebildet, so dass im Folgenden nur das eine im Detail beschrieben wird.

Das jeweilige Gleitteil 28', 28'' hat drei langgestreckte Führungsleisten 33, 34, 36, die mit ihrer Längsrichtung parallel zur zugehörigen Führungsschiene 12, 14 verlaufen und die derart zusammengesetzt sind, dass sie im Querschnitt eine U-förmige Gleitnut ausbilden, in welcher die zugehörige rahmenseitige Führungsleiste 24, 26 aufgenommen ist. Hierbei ist die eine Führungsleiste 33 nach vorne hin gewandt und an der Rückseite der Frontplatte 32 befestigt (hier mittels Schrauben); die zweite Führungsleiste 34 ist seitlich an der Außenseite der rahmenseitigen Führungsleiste 24, 26 angeordnet und an der ersten Führungsleiste 33 befestigt (hier mittels Schrauben); die dritte Führungsleiste 36 ist an der Rückseite der rahmenseitigen Führungsleiste 24, 26 angeordnet und hier mittels Durchgangsschrauben durch die zweite Führungsleiste 34 hindurch an der ersten Führungsleiste 33 befestigt. Die jeweiligen drei Führungsleisten 33, 34, 36 bilden damit zusammen im Querschnitt ein U-Profil aus (siehe Figur 5), von dem die zugehörige rahmenseitige Führungsleiste 24, 26 an je drei Längsseiten umschlossen ist, und zwar an der der Podestplattform 30 zugewandten, vorderen Längsseite, an der nach außen gewandten Seite und an der Rückseite. Die rahmenseitigen Führungsleisten 24, 26 sind hierbei nahezu spielfrei umschlossen. Ein seitliches Herausgleiten der Kombination aus den gleitschlittenseitigen Führungsleisten 33, 34, 36 aus der zugehörigen rahmenseitigen Führungsleiste 24, 26 ist von der jeweils gegenüberliegend angeordneten Kombination aus gleitschlittenseitigen Führungsleisten 33, 34, 36 an der anderen rahmenseitigen Führungsschiene verhindert, da die von den jeweiligen Führungsschienen 33, 34, 36 ausgebildeten Aufnahmenuten, in denen die jeweilige rahmenseitige Führungsleiste 24, 26 aufgenommen ist, nach innen aufeinander zu weisen. An den der zugehörigen rahmenseitigen Führungsleiste 24, 26 zugewandten Seiten der gleitschlittenseitigen Führungsleisten 33, 34, 36 sind langgestreckte Gleitplatten (nicht dargestellt) lösbar angebracht; die Gleitplatten sind beispielsweise mittels Senkschrauben von ihrer Gleitseite her an die Führungsleisten geschraubt. Alternativ oder zusätzlich können solche Gleitplatten auch an den rahmenseitigen Führungsleisten 24, 26 vorgesehen sein. Die Gleitplatten sind an ihrer Gleitseite mit einer speziellen Beschichtung versehen, womit eine derart reibungsarme Reibpaarung geschaffen ist, dass zusätzliche Schmierstoffe, wie z. B. Fett, nicht erforderlich sind.

Die Podestplattform 30 weist zwei sich horizontal erstreckende und zueinander parallel angeordnete L-förmige Stützträger 40 auf, die mit ihrem kurzen L-Schenkel 42 nach unten weisend am jeweiligen Gleitteil 28' bzw. 28" des Gleitschlittens 28 befestigt sind (hier mittels Schrauben). Die beiden Stützträger 40 sind über eine sich über diese hinwegerstreckende Abdeckhaube 44 fest miteinander verbunden, so dass ein insgesamt ausgesteifter, mittels Gleitens höhenverstellbarer Komplex aus Stützträgern 40, Abdeckhaube 44 und dem zugehörigen Gleitschlitten 28 gebildet ist. Die Gleitschlittenteile 28', 28", 32 sind hierbei aus optischen Gründen ebenfalls von der Abdeckhaube 44 überdeckt.

Die Abdeckhaube 44 weist eine ebene obere Fläche auf, welche als (Fuß-)Auflage- oder Stützfläche dient. In diesem Falle ist diese Stützfläche nach vorne hin, das heißt, von den hinten angeordneten Stützsäulen 12, 14 weg leicht schräg nach unten geneigt vorgesehen. In diesem Falle ist ferner ein Pedal 48 in die Podestplattform 30 integriert, welches über eine elektrische Leitung 50 mit einer zu betätigenden Einrichtung verbunden ist, z. B. mit einer Überwachungseinrichtung.

Auf einer durch die beiden Führungsschienen 12, 14 gehenden horizontalen Linie ist mittig zwischen den beiden Führungsschienen 12, 14 eine Gasdruckfeder 52 angeordnet, welche sich vertikal zwischen der Basis 2 und dem Gleitschlitten 28 erstreckt und welche den Gleitschlitten 28 vertikal gegen die Basis 2 abstützt. Hierzu ist die Hubstange 56 der Gasdruckfeder 52 mit ihrem oberen Ende 58 in der Mitte des Brückenteils 29 fest an diesem angebracht, und der Hubzylinder 60 der Gasdruckfeder 52 ist mit seinem unteren Ende 62 an der oberen Abdeckplatte 6 der Basis 2 fest angebracht. Die Gasdruckfeder 52 ist mittels eines Fußhebels 64 derart betätigbar, dass sie durch Drücken des Fußhebels 64 entriegelbar ist, worauf die Federkraft den Gleitschlitten 28 zusammen mit der Podestplattform 40 nach oben drückt. Im Gegenzug kann die Podestplattform 30 gegen den Gasdruck der Gasdruckfeder 52 auch nach unten gedrückt werden, wobei jeweils durch Loslassen des Pedalhebels 64 die Gasfeder in ihrer jeweiligen Position wieder fest verriegelt werden kann, wodurch der Gleitschlitten 28 zusammen mit der daran angebrachten Podestplattform 30 ebenfalls fest verriegelt ist. Der-Fußhebel erstreckt sich durch eine Ausnehmung in der Frontplatte 32 nach vorne und ist an letzterer angeflanscht.

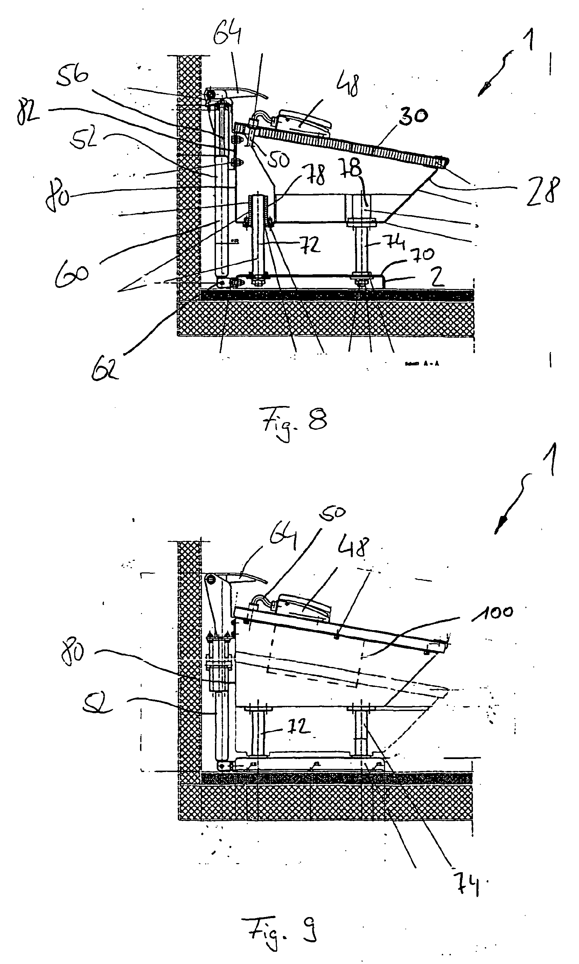

In den Figuren 8 bis 11 ist ein höhenverstellbares Podest 1 nach einer anderen Ausführungsform der Erfindung dargestellt. Hierbei sind für wesensgleiche Teile die gleichen Bezugszeichen wie bei der ersten Ausführungsform verwendet.

Das Podest 1 nach dieser Ausführungsform weist eine Basis 2 in Form einer flachen Wanne 70 auf, welche nach unten hin offen ist und welche seitlich nach außen gebogene Abschnitte aufweist, welche als Flansche zur Befestigung am Boden dienen.

Auf der Basis 2 sind drei als Gleitschlitten-Führungseinrichtung dienende, im Querschnitt kreiszylindrische Führungssäulen 72, 74, 76 vertikal verlaufend angeordnet, welche mit ihrem unteren Ende plan auf der Basis 2 aufstehen und sich mit einem zentralen Gewindeabschnitt durch ein Loch in der Basis 2 hindurcherstrecken, gegen welche sie dann mit einer Kontermutter festgeschraubt sind. Indem die Basis 2 leicht wannenförmig ausgebildet ist, sind die genannten Gewindeabschnitte und die darauf geschraubten Kontermuttern in dieser Wanne nach außen hin optisch verdeckt aufgenommen.

In der Draufsicht gesehen, definieren die Führungssäulen 72, 74, 76 ein Dreieck, wobei zwei vordere Führungssäulen 74, 76 die Grundlinie des Dreiecks definieren, und wobei eine hintere Führungssäule 72 die Spitze des Dreiecks festlegt.

Auf die Führungssäulen 72, 74, 74 ist ein wannenförmiger Gleitschlitten 28 aufgesetzt, der eine nach oben hin offene Wanne darstellt und in dessen Unterseite kreiszylindrische Gleitbuchsen 78 eingelassen sind, die mit den jeweils zugehörigen Führungssäulen 74, 76, 72 korrespondieren. Die Gleitbuchsen 78 haben an ihrem unteren Ende einen als Flansch dienenden Kragen, mittels dessen sie an die untere Seite des Gleitschlittens 28 anliegend mit diesem zusammengeschraubt sind. Die Führungssäulen 72, 74, 76 erstrecken sich nahezu spielfrei durch die jeweils zugehörige Gleitbuchse 78, so dass der Gleitschlitten 28 kippfrei und damit verkantungssicher und dennoch wackelfrei vertikal geführt ist.

Die offene obere Seite des Gleitschlittens 28 ist von einer Podestplattform 30 abgedeckt, welche hier als Platte ausgebildet ist. Auf der Podestplattform 30 ist ein Betätigungspedal 48 angeordnet, welches über eine elektrische Leitung 50 mit einer zu betätigenden Einrichtung verbunden ist.

An der hinteren Stirnseite 80 des Gleitschlittens 28 erstreckt sich vertikal sowie mittig eine Gasdruckfeder 52, die benachbart zur hinteren Führungssäule 72 verläuft. Die Hubstange 56 der Gasdruckfeder 52 ist über eine fest damit verbundene Halteplatte 82 fest am wannenförmigen Gleitschlitten 28 angebracht. Hierzu ist die Halteplatte 82 mittels Schrauben an die Rückseite des wannenförmigen Gleitschlittens 28 geschraubt (siehe Figur 8). Der Hubzylinder 60 der Gasdruckfeder 52 ist mit seinem unteren Ende 62 an der Basis 2 mittels einer Schraube befestigt. Damit ist der Gleitschlitten 28 von der Gasdruckfeder 52 vertikal gegen die Basis 2 abgestützt. Die Gasdruckfeder 52 ist über einen Fußhebel 64 verstellbar, so dass der damit fest verbundene Gleitschlitten 28 gemäß der Einstellung durch die Gasdruckfeder ebenfalls vertikal verstellbar ist.

Nach dieser Ausführungsform sind an dem Podest 1 noch zwei weitere Pedale, zum Beispiel zur Steuerung des Schienenfahrzeuges, vorgesehen.

Nach dieser Ausführungsform ist ferner an der Unterseite der Podestplattform 30 ein nur schematisch dargestellter Heizlüfter 100 angebracht, der einen kastenförmigen Grundkörper aufweist, in dem ein Heizelement, wie eine elektrische Heizschlange, sowie ein Ventilator zum Ausblasen der vom Heizelement erwärmten Luft aus dem Grundkörper untergebracht sind. Der Heizlüfter 100 ist bevorzugt mit seiner Luftausgangsseite zur Podestplattform 30 hin gerichtet, wobei zwischen der Unterfläche der Podestplattform 30 und dem Heizlüfter 100 noch ein ausreichender Spalt vorliegt, damit fortlaufend erwärmte Luft an der Podestplattform 30 vorbeiströmen kann. Der Heizlüfter ist bevorzugt so angeordnet, dass die Luft in Richtung auf die Podestplattform 30 geblasen wird.

Alternativ zu vorstehend beschriebener Heizeinrichtung in Form des Heizlüfters, kann die Podestplattform ihrerseits z. B. als integrales Heizteil ausgebildet sein. Hierzu zeigen Figuren 12 bis 16 mögliche Varianten wie eine solche Heiz-Podestplattform gemäß der Erfindung ausgestaltet sein kann.

Nach der Ausführungsform von Figur 12 ist eine Podestplattform 30 mit einer tragenden Grundplatte 120, einer darauf angebrachten, gegenüber der Grundplatte 120 dünneren Mittelplatte 122 und einer darüber angeordneten, gegenüber der Mittelplatte 122 noch dünneren Deckplatte 124 vorgesehen. In der Mittelplatte 122 sind Ausnehmungen 126 (hier Durchgangsöffnungen) eingebracht, in denen Flächenheizelemente 128 aufgenommen sind, die mit ihrer Oberseite an der Unterseite der Deckplatte 124 angebracht und nach unten hin in einem Abstand zur Mittelplatte 122 oder wie hier zur Grundplatte 120 angeordnet sind. Damit erfolgt eine Wärmeübertragung insbesondere nach oben in Richtung Deckplatte 124, welche gleichzeitig die Oberseite der Podestplattform 30 bildet. Die Anzahl und Anordnung an Ausnehmungen, die Höhe der Ausnehmungen 128 und die Wärmeleitfähigkeit der Grundplatte 120, der Mittelplatte 122 und der Deckplatte 124 wird je nach gewünschtem horizontalem und vertikalem Wärmeprofil gewählt. Die Dicker der Mittelplatte 122 ist größer als die Dicke der Flächenheizelemente 128.

In Figur 13 ist eine zu der in Figur 12 gezeigten Variante ähnliche Ausführungsform dargestellt, mit einer Podestplattform 30 mit einer Grundplatte 120, einer Mittelplatte 122, einer Deckplatte 124 und wenigstens einem an der Unterseite der Deckplatte 124 angebrachten Flächenheizelement 128, das in einer in der Mittelplatte 122 ausgebildeten Ausnehmung 126 aufgenommen ist. Im Unterschied zu vorstehend erläuterter Ausführungsform ist hier zwischen Mittelplatte 122 und Grundplatte 120 noch eine Zwischenplatte 130 vorgesehen, die etwa die Stärke der Deckplatte 124 hat.

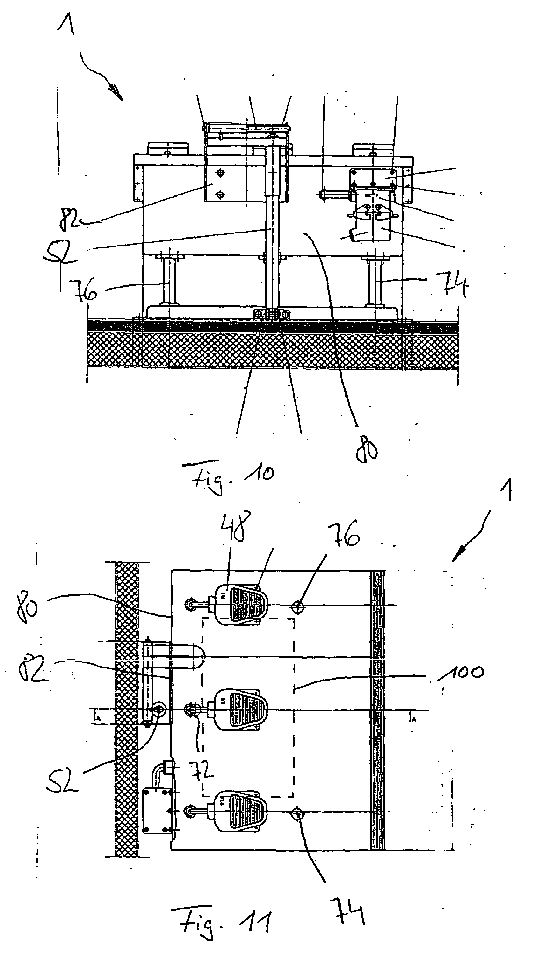

In Figur 14 ist eine zu der in Figur 13 gezeigten Variante ähnliche Ausführungsform dargestellt, mit dem Unterschied, dass hier als Heizeinrichtung ein PTC-Heizelement 132 vorgesehen ist, das eine starke lokale Wärmeentwicklung hat, so dass es, um an der Deckplatte 124 lokale Hitzestellen zu vermeiden, auf der Oberseite der Zwischenplatte 130 in einem Vertikalabstand zur Deckplatte 124 angeordnet ist. Die Wärme wird hierbei über die Zwischenplatte und die Mittelplatte 122 zur Deckplatte 124 hin geleitet. Die Grundplatte 120 dient wiederum insbesondere als Trägerstruktur.

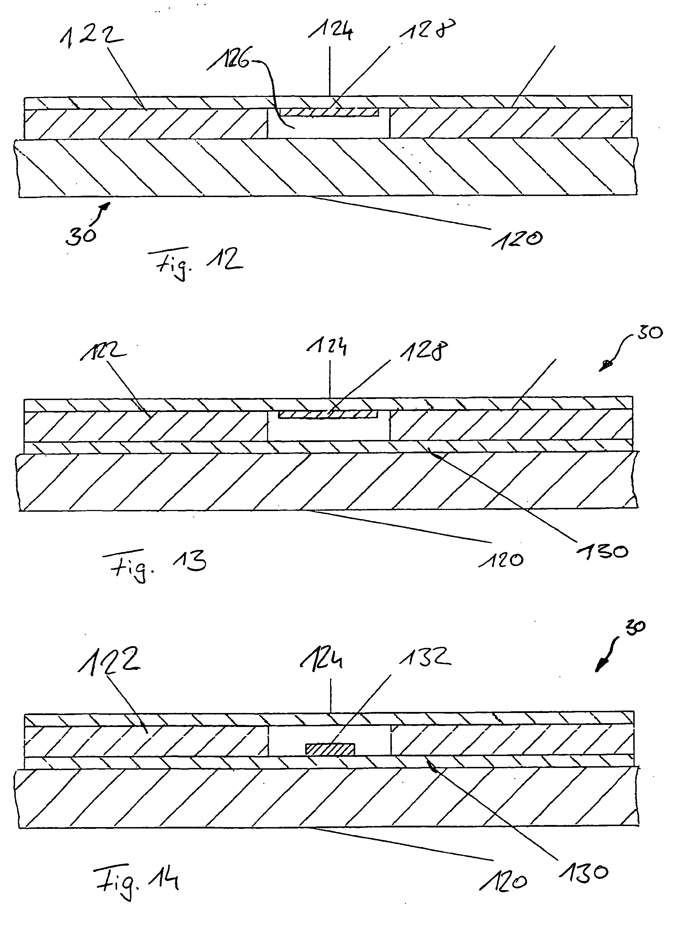

In Figur 15 ist eine Podestplattform 30 nach einer anderen Variante mit Schichtaufbau dargestellt, mit einer Deckplatte 124, einer Grundplatte 120, die etwa die gleiche Dicke wie die Deckplatte 124 hat, einer dazwischen liegenden, gegenüber der Deckplatte 124 und der Grundplatte 120 dickeren Mittelplatte 122, in der wenigstens eine quer durchgehende Ausnehmung 126 ausgebildet ist, und mit wenigstens einem der jeweiligen Ausnehmung 126 zugeordnetem Heizelement 132, wie insbesondere eine PTC-Heizkeramik, das unterhalb der jeweiligen Ausnehmung 126 wärmeleitend an der Unterseite der Grundplatte 120 angebracht ist und von einer ebenfalls auf der Unterseite der Grundplatte angebrachten Isolationsschicht 125 umgeben ist.

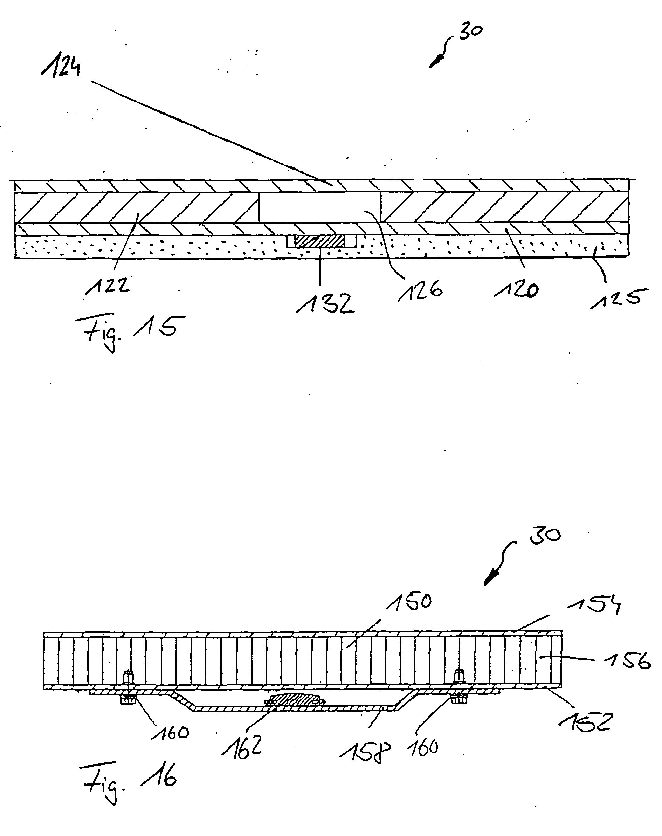

In Figur 16 ist im Querschnitt eine mögliche Podestplattform 30 dargestellt, mit einer Tragplatte 150, die eine dünne Grundplatte 152, eine dünne Deckplatte 154 und eine dazwischen angeordnete Versteifungsstruktur 156, z. B. in Form eine Wabenstruktur, aufweist. An die Unterseite der Grundplatte 152 sind ein oder mehrere wannenförmige Aufnahmeteile 158 angeflanscht (hier mittels Schrauben 160), in denen jeweils ein Heizelement 162, insbesondere in Form eines PTC-Heizelements, aufgenommen sind, die in einem Vertikalabstand zur Grundplatte 152 auf dem Boden des wannenförmigen Aufnahmeteils 158 angeordnet sind.

## Patentansprüche

1. Höhenverstellbares Podest (1) mit einer Basis (2), einer Führungseinrichtung (8; 72, 74, 76), die sich vertikal erstreckend auf der Basis (2) angeordnet ist, einem Gleitschlitten (28), der an der Führungseinrichtung (8; 72, 74, 76) derart abgestützt ist, dass er entlang derselben vertikal geführt gleiten kann, einer Podestplattform (30), welche am Gleitschlitten (28) befestigt ist und sich von diesem aus im wesentlichen horizontal erstreckt, **dadurch gekennzeichnet, daß** das Podest mit einer verstellbaren Gasdruckfeder (52) versehen ist, die vertikal zwischen die Basis (2) und den Gleitschlitten (28) geschaltet ist und von welcher der Gleitschlitten (28) zusammen mit der daran angebrachten Podestplattform (30) gegen die Basis (2) in Vertikalrichtung verstellbar abgestützt ist.

2. Höhenverstellbares Podest (1) nach Anspruch 1, wobei die Führungseinrichtung einen Führungsrahmen (8) mit wenigstens zwei vertikalen Führungsschienen (12, 14) aufweist, die parallel in einem Abstand voneinander verlaufen und von denen der Gleitschlitten (28) geführt ist, wobei die Gasdruckfeder (52) horizontal gesehen im wesentlichen auf Höhe der sowie zwischen den beiden Führungsschienen (12, 14) angeordnet ist, und wobei die Podestplattform (30) stirnseitig am Gleitschlitten (28) befestigt ist und sich mit einem Auslegerabschnitt vom Führungsrahmen (8) weg erstreckt.

3. Höhenverstellbares Podest (1) nach Anspruch 2, wobei die Führungsschienen mit einer Gleitbeschichtung versehen sind.

4. Höhenverstellbares Podest (1) nach Anspruch 2, wobei der Gleitschlitten (28) mit lösbar daran angebrachten Gleitplatten (38) versehen ist, die entlang der Führungsschienen (12, 14) gleitend geführt sind und die unter Ausbildung eines reibungsarmen Gleitlagers zwischen Gleitschlitten (28) und Führungsschiene (12, 14) auf ihrer der zugehörigen Führungsschiene (12, 14) zugewandten Seite mit einer Gleitbeschichtung versehen sind.

5. Höhenverstellbares Podest (1) nach Anspruch 1, wobei die Führungseinrichtung wenigstens zwei vertikale Führungssäulen (72, 74) aufweist, die parallel in einem Abstand voneinander verlaufen und von denen der Gleitschlitten (28) geführt ist, wobei der Gleitschlitten (28) wannenförmig ausgebildet ist und auf die Führungssäulen (72, 74) aufgesetzt ist, so dass die Führungssäulen (72, 74) im Rahmen der Verlagerung des Gleitschlittens (28) in diesen versenkbar sind, wobei die Podestplattform (30) auf dem Gleitschlitten (28) angeordnet ist.

6. Höhenverstellbares Podest (1) nach Anspruch 4, wobei in den Gleitschlitten (28) von dessen Unterseite her Gleitbuchsen (78) eingelassen sind, in welchen die Führungssäulen (72, 74) gleitend aufgenommen sind.

7. Höhenverstellbares Podest (1) nach einem der Ansprüche 1 bis 6, wobei die Gasdruckfeder (52) mittels eines Fußhebels (64) fußbetätigt oder mittels eines Handhebels handbetätigt verstellbar ist.

8. Höhenverstellbares Podest (1) nach einem der Ansprüche 1 bis 7, wobei an der Unterseite der Podestplattform (30) eine Heizvorrichtung vorgesehen ist, mittels welcher die Podestplattform (30) beheizbar ist.

9. Höhenverstellbares Podest (1) nach Anspruch 8, wobei die Podestplattform (30) als integrales Heizpaneel ausgebildet ist, das einen Verbundaufbau mit einer eine Wabenstruktur aufweisenden metallischen Kernschicht (156) und zwei die Kernschicht (156) abdeckenden Deckschichten (150, 154) aufweist, wobei mindestens die untere Deckschicht (152) im wesentlichen aus einem Metallmaterial besteht, und wobei unter der unteren Deckschicht (152) mindestens eine mit dieser wärmeleitend in Verbindung stehende Heizvorrichtung (158, 162) lösbar angebracht ist, die mindestens einen an der unteren Deckschicht wärmeleitend befestigten Heizflansch (158) mit mindestens einem daran in wärmeleitender Verbindung und im Abstand von dem Heizpaneel angeordneten Heizelement (162) aufweist.

10. Höhenverstellbares Podest (1) nach Anspruch 8, wobei die Podestplattform (3) als integrale Flächenheizeinrichtung zum Beheizen von Flächenstrukturen vorgesehen ist, die eine die Oberseite der Podestplattform (30) bildende Deckplatte (124), die aus einem wärmeleitenden Material hergestellt ist, mindestens zwei blockförmige wärmeverteilende Stege (122), die aus einem wärmeleitenden Material hergestellt sind und die entlang der Deckplatte (124) im Abstand voneinander verteilt angeordnet sind und an der Unterseite der Deckplatte (124) wärmeleitend befestigt sind, und mindestens ein elektrisches Flächenheizelement (128) aufweist, das zwischen den blockförmigen Stegen (122) angeordnet ist und an der Unterseite der Deckplatte (124) wärmeleitend befestigt ist, wobei die blockförmigen wärmeleitenden Stege (122) eine Dicke aufweisen, die größer ist als die Dicke des elektrischen Flächenheizelements (128).

11. Höhenverstellbares Podest (1) nach Anspruch 8, wobei die Podestplattform (3) als integrale Flächenheizeinrichtung zum Beheizen von Flächenstrukturen vorgesehen ist, die eine die Oberseite der Podestplattform (30) bildende Deckplatte (124), die aus einem wärmeleitenden Material hergestellt ist, mindestens zwei blockförmige wärmeverteilende Stege (122), die aus einem wärmeleitenden Material hergestellt sind und die entlang der Deckplatte (124) im Abstand voneinander verteilt angeordnet sind und an der Unterseite der Deckplatte (124) wärmeleitend befestigt sind, eine Bodenplatte (130), die aus einem wärmeleitenden Material hergestellt ist und an der Unterseite der blockförmigen Stege (122) wärmeleitend angebracht ist, und mindestens ein elektrisches Heizelement (132) aufweist, das zwischen den blockförmigen Stegen auf der Oberseite der Bodenplatte (130) wärmeleitend angeordnet ist, wobei die blockförmigen wärmeleitenden Stege eine Dicke aufweisen, die größer ist als die Dicke des elektrischen Heizelements (132).

12. Höhenverstellbares Podest (1) nach Anspruch 8, wobei als Heizeinrichtung eine Luftheizvorrichtung zum Erwärmen von Raumluft eines Innenraums vorgesehen ist, von der die das Podest (30) umgebende Raumluft beheizbar ist.

13. Höhenverstellbares Podest (1) nach Anspruch 12, wobei die Luftheizvorrichtung (100) einen Ventilator aufweist und derart angeordnet ist, dass die von ihr erwärmte Luft in Richtung auf die Podestplattform (30) geblasen wird.

14. Höhenverstellbares Podest (1) nach Anspruch 8, wobei auf der Unterseite der Podestplattform (30) eine Heizmatte oder eine Heizfolie flächig aufgebracht

## Claims

1. Height-adjustable platform (1) having a base (2), a guide device (8; 72, 74, 76) which is arranged on the base (2) and extending vertically, a sliding carriage (28) which is supported at the guide device (8; 72, 74, 76) so as to be able to slide along the same such as to be guided vertically, a pedestal platform (30) which is attached to the sliding carriage (28) and extends primarily horizontally therefrom, **characterised in that** the platform is provided with an adjustable gas pressure spring (52), which is inserted vertically between the base (2) and the sliding carriage (28), and by which the sliding carriage (28) is adjustably supported in vertical direction against the base (2) together with the pedestal platform (30) attached thereto.

2. Height-adjustable platform (1) according to claim 1, wherein the guide device comprises a guide frame (8) having at least two vertical guide rails (12, 14) which are arranged parallel at a distance from each other and by which the sliding carriage (28) is guided, wherein, from a horizontal view, the gas pressure spring (52) is basically arranged at the same height as and between the two guide rails (12, 14), and wherein the pedestal platform (30) is attached to the sliding carriage (28) on the front side and extends away from the guide frame (8) with an extension portion.

3. Height-adjustable platform (1) according to claim 2, wherein the guide rails are provided with a slide coating.

4. Height-adjustable platform (1) according to claim 2, wherein the sliding carriage (28) is provided with slide plates (38) removably attached thereto, which are slidingly guided along the guide rails (12, 14) and which are provided with a slide coating so as to form a low-friction slide bearing between the sliding carriage (28) and the guide rail (12, 14) on the side facing the related guide rail (12, 14).

5. Height-adjustable platform (1) according to claim 1, wherein the guide device comprises at least two vertical guide columns (72, 74), which are arranged in parallel at a distance from each other and by which the sliding carriage (28) is guided, the sliding carriage (28) being formed as a tub and being placed on the guide columns (72, 74), such that the guide columns (72, 74) can be sunk into the same in connection with the displacement of the sliding carriage (28), the pedestal platform (30) being arranged on the sliding carriage (28).

6. Height-adjustable platform (1) according to claim 4, wherein sliding bushings (78) are embedded into the sliding carriage (28) from its lower side, into which sliding carriage the guide columns (72, 74) are slidingly incorporated.

7. Height-adjustable platform (1) according to any of claims 1 to 6, wherein the gas pressure spring (52) can be adjusted by foot operation by means of a pedal (64) or by hand operation by means of a hand lever.

8. Height-adjustable platform (1) according to any of claims 1 to 7, wherein at the lower side of the pedestal platform (30) a heating device is provided, by means of which the pedestal platform (30) can be heated.

9. Height-adjustable platform (1) according to claim 8, wherein the pedestal platform (30) is formed as integral heating panel comprising a compound structure with a metallic core layer (156) having a honeycomb structure, and two cover layers (150, 154) covering the core layer (156), wherein at least the lower cover layer (152) mainly consists of a metallic material, and wherein underneath the lower cover layer (152) at least one heating device (158, 162) heat-conductingly connected to the same is detachably mounted, which comprises at least a heating flange (158) heat-conductingly attached to the lower cover layer with at least one heating element (162) arranged at the same in a heat-conducting connection and at a distance from the heating panel.

10. Height-adjustable platform (1) according to claim 8, wherein the pedestal platform (3) is provided as integral surface heating device for heating surface structures, which comprises a cover plate (124) forming the upper side of the pedestal platform (30) which is made of a heat-conducting material, at least two block-shaped heat-distributing bars (122) which are made of a heat-conducting material and arranged along the cover plate (124) distributed at a distance from each other and which are heat-conductingly attached to the lower side of the cover plate (124), and at least an electric surface heating element (128), which is arranged between the block-shaped bars (122) and heat-conductingly attached to the lower side of the cover plate (124), the block-shaped heat-conducting bars (122) having a thickness which is greater than the thickness of the electric surface heating element (128).

11. Height-adjustable platform (1) according to claim 8, wherein the pedestal platform (3) is provided as integral surface heating device for heating surface structures, which comprises a cover plate (124) forming the upper side of the pedestal platform (30) which is made of a heat-conducting material, at least two block-shaped heat-distributing bars (122) which are made of a heat-conducting material and which are arranged along the cover plate (124) distributed at a distance from each other and which are heat-conductingly attached to the lower side of the cover plate (124), a base plate (130) which is made of a heat-conducting material and which is heat-conductingly attached to the lower side of the block-shaped bars (122), and at least an electric heating element (132) which is heat-conductingly arranged between the block-shaped bars on the upper side of the base plate (130), the block-shaped heat-conducting bars having a thickness which is greater than the thickness of the electric heating element (132).

12. Height-adjustable platform (1) according to claim 8, wherein an air heating device is provided as heating device for heating the air in an interior space, by which the air surrounding the platform (30) can be heated.

13. Height-adjustable platform (1) according to claim 12, wherein the air heating device (100) comprises a fan and is arranged such that the air heated by the air heating device is blown in the direction of the pedestal platform (30).

14. Height-adjustable platform (1) according to claim 8, wherein a heater mat or a heater foil is two-dimensionally applied onto the lower side of the pedestal platform (30).

## Revendications

1. Plate-forme ou plateau (1) réglable à hauteur comprenant une embase (2), un organe de guidage (8, 72, 74, 76) qui est disposé en s'étendant verticalement sur l'embase (2), un coulisseau (28) qui est en appui sur l'organe de guidage (8, 72, 74, 76) de sorte qu'il puisse coulisser le long de celui-ci tout en étant guidé verticalement, une plate-forme (30) de plateau qui est fixé sur le coulisseau (28) et s'étend à partir de celui-ci vers l'extérieur de façon sensiblement horizontale, **caractérisé en ce que** la plate-forme est munie d'un ressort réglable (52) à pression de gaz qui est monté verticalement entre l'embase (2) et le coulisseau (28), et sur lequel est appuyé contre l'embase (2) et de façon réglable dans la direction verticale, le coulisseau (28) en même temps que la plate-forme (30) de plateau montée sur le coulisseau.

2. Plate-forme (1) réglable en hauteur selon la revendication 1, dans laquelle l'organe de guidage comporte un cadre de guidage (8) muni d'au moins deux barres de guidage verticales (12, 14) qui courent parallèlement et à distance l'une de l'autre et sur lesquelles est guidé le coulisseau (28) dans laquelle plate-forme le ressort (52) à pression de gaz, vu horizontalement, est disposé sensiblement à hauteur des barres de guidage et entre les deux barres de guidage (12, 14) et dans laquelle plate-forme, la plate-forme (30) de plateau est fixée du côté frontal sur le coulisseau (28) et s'étend par un tronçon de console à partir du cadre de guidage (8).

3. Plate-forme (1) réglable en hauteur selon la revendication 2, dans laquelle les barres de guidage sont revêtues d'un revêtement ou couche de glissement.

4. Plate-forme (1) réglable en hauteur selon la revendication 2, dans laquelle le coulisseau (28) est muni de plaques de glissement (38) montées amovibles, qui sont guidées en glissant le long des barres de guidage (12, 14) et qui, dans une configuration d'un palier de glissement à faible friction, sont munies entre le coulisseau (28) et la barre de guidage (12, 14) d'un revêtement de glissement sur la face tournée vers la barre de guidage (12, 14) associée

5. Plate-forme (1) réglable en hauteur selon la revendication 1 dans laquelle l'organe de guidage comporte au moins deux colonnes verticales de guidage (72, 74) qui courent parallèlement et à distance l'une de l'autre et par lesquelles le coulisseau (28) est guidé et, dans laquelle plate-forme le coulisseau (28) est réalisé en forme de cuve et est monté sur les colonnes de guidage (72, 74) de sorte que les colonnes de guidage (72, 74) dans le cadre du déplacement de coulisseau (28) soient susceptibles d'être noyées dans ce coulisseau, la plate-forme (30) de plateau étant montée sur le coulisseau (28).

6. Plate-forme (1) réglable en hauteur selon la revendication 4 dans laquelle sont montés dans le coulisseau (28) depuis la face inférieure de celui-ci, des manchons de glissement (78) dans lesquelles sont emprisonnées de façon glissante les colonnes de guidage (72, 74).

7. Plate-forme (1) réglable en hauteur selon l'une des revendications 1 à 6 dans laquelle le ressort (52) à pression de gaz est réglable au moyen d'un levier à pied (64) actionné au pied ou au moyen d'un levier à main actionné à la main.

8. Plate-forme (1) réglable en hauteur selon l'une des revendications 1 à 7 dans laquelle est prévu sur la face inférieure de la plate-forme (30) de plateau un organe de chauffage au moyen duquel la plate-forme (30) de plateau est susceptible d'être chauffée.

9. Plate-forme (1) réglable en hauteur selon la revendication 8, dans laquelle la plate-forme (30) de plateau est réalisée comme un panneau de chauffage monobloc qui comporte une superstructure composite constituée d'une couche de noyau (156) métallique présentant une structure en nids d'abeilles et de deux couches de recouvrement (150, 154) recouvrant la couche de noyau (156) au moins la couche de recouvrement inférieure (152) se composant pour l'essentiel d'un matériau métallique, et dans laquelle plate-forme est monté de façon amovible, en dessous de la couche de recouvrement inférieure (152), au moins un organe de chauffage (158, 162) qui se trouve en liaison de conduction de chaleur avec la couche de recouvrement et qui comporte au moins une plaque rapportée (158) de chauffage qui est fixée sur la couche de recouvrement inférieure en situation de conduction de la chaleur et sur laquelle plaque rapportée est monté un élément de chauffage (162) se trouvant localement en liaison de conduction de la chaleur avec et à distance du panneau de chauffage.

10. Plate-forme (1) réglable en hauteur selon la revendication 8 dans laquelle la plate-forme (3) de plateau est prévue sous la forme d'un organe monobloc de chauffage de surface pour chauffer des structures de surface et qui est constitué d'une plaque de couverture (124) formant la face supérieure de la plate-forme (30) de plateau et qui est fabriquée en un matériau conducteur de la chaleur et organe de chauffage constitué d'au moins deux barrettes (122) en forme de bloc répartissant la chaleur et qui sont réalisées en un matériau conduisant la chaleur, sont disposées le long de la plaque de recouvrement (124), réparties à distance l'une de l'autre, et sont fixées en situation de conduction de la chaleur sur la face inférieure de la plaque de couverture (124) et organe de chauffage qui comporte au moins un élément de chauffage électrique (128) de surface qui est disposé entre les barrettes (122) en forme de bloc et est fixé en situation de conduction de la chaleur sur la face inférieure de la plaque (124) de couverture, les barrettes (122) en forme de bloc conduisant la chaleur présentent une épaisseur qui est supérieure à l'épaisseur de l'élément électrique (128) de chauffage de surface.

11. Plate-forme (1) réglable en hauteur selon la revendication 8 dans laquelle la plate-forme (3) de plateau est prévu sous la forme d'un organe formant bloc de chauffage bidimensionnel ou de surface pour chauffer des structures de surface et qui est constitué : d'une plaque de couverture (124) formant la face supérieure de la plate-forme (30) de plateau et qui est fabriquée en un matériau conducteur de la chaleur ; d'au moins deux barrettes (122) en forme de bloc et répartissant la chaleur et qui sont réalisées en un matériau conduisant la chaleur, sont disposées le long de la plaque de couverture (124) réparties à distance l'une de l'autre et sont fixées en situation de conduction de la chaleur sur la face inférieure de la plaque de couverture (124) ; d'une plaque de fond (130) qui est fabriquée en un matériau conduisant la chaleur et est montée en situation de conduction de la chaleur sur la face inférieure de la barrette (122) en forme de bloc ; et d'au moins un élément de chauffage électrique (132) qui est disposé en situation de conduction de la chaleur entre les barrettes en forme de bloc sur la face supérieure de la plaque de fond (130) la barrette en forme de bloc et conduisant la chaleur présentant une épaisseur qui est supérieure à l'épaisseur de l'élément de chauffage électrique (132).

12. Plate-forme (1) réglable en hauteur selon la revendication 8 dans laquelle est prévu comme organe de chauffage un dispositif de chauffage à l'air pour réchauffer l'air ambiant d'un espace intérieur et à l'aide duquel l'air ambiant entourant la plate-forme (30) est susceptible d'être chauffé.

13. Plate-forme (1) réglable en hauteur selon la revendication 12 dans laquelle le dispositif (100) de chauffage à l'air comporte un ventilateur et est agencé de sorte que l'air réchauffé par ce dispositif soit soufflé en direction de la plate-forme (30) de plateau.

14. Plate-forme (1) réglable en hauteur selon la revendication 8 dans laquelle est disposée à la façon d'une nappe à deux dimensions, sur la face inférieure de la plate-forme (30) à plateau, une nappe de chauffage ou une feuille de chauffage.
